Europäisches Patentamt

European Patent Office

Office européen des brevets

(11) Publication number: **0 110 505**
**B1**

# EUROPEAN PATENT SPECIFICATION

(45) Date of publication of patent specification: **22.07.87**

(21) Application number: **83305047.9**

(22) Date of filing: **01.09.83**

(51) Int. Cl.⁴: **C 08 L 53/00, C 08 L 51/06, C 08 L 23/12, C 09 D 3/00, C 09 J 3/00, B 32 B 15/08**

(54) **Bonding resin composition.**

(30) Priority: **03.09.82 US 414695**

(43) Date of publication of application:
**13.06.84 Bulletin 84/24**

(45) Publication of the grant of the patent:
**22.07.87 Bulletin 87/30**

(84) Designated Contracting States:
**DE FR GB IT NL SE**

(56) References cited:
**FR-A-2 027 802**
**FR-A-2 054 442**
**GB-A-1 083 967**
**US-A-3 365 519**
**US-A-4 251 646**
**US-A-4 278 510**

(73) Proprietor: **HERCULES INCORPORATED**
**Hercules Plaza**
**Wilmington Delaware 19899 (US)**

(72) Inventor: **Liu, Chia-Seng**
**9 White Clay Crescent Meeting House Hill**
**Newark Delaware 19711 (US)**

(74) Representative: **De Minvielle-Devaux, Ian Benedict Peter et al**
**CARPMAELS & RANSFORD 43, Bloomsbury Square**
**London WC1A 2RA (GB)**

## 0 110 505

**Description**

This invention resides in the chemical arts. More particularly, it relates to synthetic resins having adhesive properties, and to the use of such resins.

The specification of British Patent 1,020,740 discloses the use of maleic anhydride-modified propylene polymers as bonding resins for bonding polyolefins to metals such as steel and aluminum.

The U.S. Patent 3,483,276, to Mahlman discloses blends of maleic anhydride-modified polymers and propylene polymers, and the use of the blends as metal coatings.

These references define propylene polymers to include all polymers derived from propylene, whether essentially amorphous or essentially crystalline, including copolymers, inclusive of block copolymers, of propylene with one, or more other monomers.

This invention, in summary, in one aspect comprises a bonding resin composition composed of a blend consisting essentially of (a) maleic anhydride-modified, stereoregular polypropylene having a combined maleic anhydride content of about 0.5—0.8% by weight of said modified polypropylene; and (b) base polymer material at about 25 parts by weight per part by weight of said maleic anhydride-modified polypropylene, said material being selected from the group consisting of (i) stereoregular polypropylene and essentially crystalline, sequentially polymerized propylene-ethylene product having a combined ethylene content of about 25% by weight of the product, the weight ratio of said polypropylene to said product being about 1:3—3:1, and (ii) essentially crystalline, sequentially polymerized propylene-ethylene product having a combined ethylene content of about 7% by weight of the product, and essentially crystalline, sequentially polymerized propylene-ethylene product having a combined ethylene content of about 25% by weight of the product, the weight ratio of the 7% ethylene product to the 25% ethylene product being about 1:3—3:1.

The maleic-anhydride modified, stereoregular polypropylene component of the bonding resin composition of this invention is well known. It, blended with a hindered phenol and a thio ester as stabilizers at concentrations of 0.4—0.5% by weight thereof, is commercially available as Hercoprime A. ("Hercoprime A" is a Trade Mark).

Stereoregular polypropylene is well known and commercially available. A preferred stereoregular polypropylene is one having a nominal melt flow rate (ASTM D 1238L, $I_2$ at 230°C.) of 3—5. It, blended with a hindered phenol antioxidant at 50—100 ppm of the polymer is available as Pro-fax 6501.

The essentially crystalline sequentially polymerized propylene-ethylene products likewise are well known and commercially available. They are prepared by sequentially polymerizing propylene and ethylene. They are blends of propylene homopolymer, ethylene homopolymer, and random copolymers of propylene and ethylene. Essentially crystalline, sequentially polymerized propylene-ethylene products having a combined ethylene content of about 7% by weight of the product and blended with a hindered phenol antioxidant at 50—100 ppm of the product are commercially available as the Pro-fax 7000 series products. Essentially crystalline, sequentially polymerized propylene-ethylene products with an ethylene content of about 25% by weight of the product with a hindered phenol antioxidant content of about 50—100 ppm are commercially available as the Pro-fax 8000 series products. ("Pro-fax" is a Trade Mark).

While the weight ratio of the components of each combination in the base polymer material group can vary within the indicated range, a preferred weight ratio when the base polymer material is the (i) combination, is 25:75 (or 1:3), and, when the base polymer material is the (ii) combination, is 50:50 or (1:1).

In addition to the above essential components of the bonding resin composition of this invention, the composition can comprise other components including, for example, additional antioxidants and stabilizers, property improvers, fillers, extenders, and the like.

The bonding resin composition of this invention can be made by normal mixing and melt compounding, procedures. For example, in one embodiment of the method for making the composition, the maleic anhydride-modified stereoregular polypropylene and the base polymer material, both preferably in finely divided or powder condition, and other additives, if any, but preferably comprising an additional stabilizer and an addition antioxidant, are premeasured individually, and then mixed together well in a Henschel mill ("Henschel" is a Trade Mark). The resulting mixture is melt compounded in an extruder at a melt temperature below 290°C. Temperatures higher than 290°C. should be avoided to prevent excessive degradation of the components of the composition. The melt compounded composition is withdrawn from the extruder. It is pelletized and later converted into sheet or film or directly converted into sheet or film.

The bonding resin composition of this invention is useful in bonding essentially crystalline propylene polymer sheets and films to other substrates such as, for example, sheets and films of ethylene-vinyl alcohol copolymer, and sheets and foils of metals such as, for example, steel and aluminum. It also is useful as the synthetic resin in synthetic resin/metal laminates, including metal/synthetic resin/metal laminates.

This invention in another aspect comprises a synthetic resin/metal laminate comprising a sheet consisting essentially of the bonding resin composition directly bonded to a sheet consisting essentially of metal selected from the group consisting of steel and aluminum. In a preferred embodiment the laminate comprises another sheet consisting essentially of the same or different metal bonded to the sheet of bonding resin composition. The laminate can be made by conventional ways and means. In this regard, the

0 110 505

bonding resin composition can be made as above, and then extruded as a sheet directly onto a sheet of metal, or between the two sheets of metal, and the combination of sheets is then subjected to heat and pressure to form the laminate. Hence, this invention in still another aspect comprises a method of making the foregoing synthetic resin/metal laminate.

The best mode now contemplated of carrying out this invention, is illustrated by the following examples. This invention is not limited to these examples.

Examples 1 and 2

These examples illustrate preferred embodiments of the bonding resin composition of this invention. The formulation of each embodiment is:

| Components | Parts by weight |
|---|---|
| Maleic anhydride-modified, stereoregular polypropylene product | 1 |
| Base polymer material | 25 |
| 1,3,5-Trimethyl-2,4,6-tris(3,5-di-t-butyl-4-hydroxy benzyl) benzene | 0.025 |
| CaO | 0.005 |

In both Examples the maleic anhydride-modified stereoregular polypropylene product is the Hercoprime A product described above.

In Example 1 the base polymer material consists of a stereoregular polypropylene product such as the Pro-fax 6501 product described above, and an essentially crystalline sequentially polymerized propylene-ethylene product having a combined ethylene content of about 25% by weight of the product, the weight ratio of one to the other being 1:1. An example of the latter product is Pro-fax 8501 which has a nominal melt flow rate of 3—5, and a hindered phenol antioxidant at 50—100 ppm of the product.

In Example 2 the base polymer material consists of an essentially crystalline sequentially polymerized propylene-ethylene product having a combined ethylene content of about 7% by weight of the product, and an essentially crystalline, sequentially polymerized propylene-ethylene product having a combined ethylene content of about 25% by weight of the product, such as the Pro-fax 8501 product described above, at a weight ratio of 1:1. An example of the first product is Pro-fax 7501 which has a nominal melt flow of 3—5, and a hindered phenol antioxidant at 50—100 ppm of the product.

In the formulation the substituted benzene compound is a hindered phenol antioxidant commercially available as Antioxidant 330 from Ethyl Corporation. The calcium oxide component is present because of its antiacid properties.

These embodiments of the bonding resin composition of this invention are made as above described.

The bonding resin compositions of these examples, are used, for example, by extending them into sheets at a temperature of about 245°C. and applying the sheets to sheets of steel or aluminum or both under pressure and at a temperature of 205°C.

The outstanding properties of the bonding resin composition of this invention are illustrated by the following data obtained in the following described laboratory work in which samples of nine bonding resin compositions were made and tested.

The general formulation of each composition was the same as the above formulation for Examples 1 and 2. The maleic anhydride-modified stereoregular polypropylene component of each sample was the previously referred to Hercoprime A product. The base polymer material composition of each sample was as indicated in the following table in which "PP" means stereoregular polypropylene, "SP P-7E" means an essentially crystalline, sequentially polymerized propylene-ethylene product in which the combined ethylene content is about 7% by weight, and "SP P-25E" means an essentially crystalline, sequentially polymerized propylene-ethylene product in which the combined ethylene content is about 25% by weight. The stereoregular polypropylene used in this test work was the above described Pro-fax 6501 product. The essentially crystalline, sequentially polymerized propylene-ethylene product with 7% ethylene was the Pro-fax 7501 product described above, while the essentially crystalline, sequentially polymerized propylene-ethylene product with an ethylene content of 25% by weight was the above mentioned Pro-fax 8501 product.

The sample in each instance was made by first mixing the base polymer material and the additives in a blender to form a premix, adding the maleic anhydride-modified stereoregular polypropylene product to the premix, and tumble blending. The mixture then was introduced into a 3/4 inch (19.05 mm) Brebender extruder for melt compounding at temperatures of 205—245°C. ("Brebender" is a Trade Mark.) Following this step 20 mil (508 µm) sheets were cast at a melt temperature of about 245°C. with a 1 and 1/4 inch (31.75 mm) Hartig (TM) extruder and a 6 inch (152.4 mm) sheet die. The resulting sheets were evaluated for bond strength by preparing 4 inch (101.6 mm) by 6 inch (152.4 mm) steel/sheet/steel laminates from each sample

3

sheet and 15-mil (381 μm) Weirchrome (TM) treated steel sheets in a platen press at a temperature of 205°C., a pressure of about 50 p.s.i. (345 kPa), and dwell times of 5, 10, 20, 40, 60, 120 and 180 seconds. ("Weirchrome" is a Trade Mark) The laminates were removed from the press at the end of the respective dwell times, and cooled between two 1/2 inch (12.7 mm) aluminum plates. Then the laminates were cut into three 1 inch (25.4 mm) by 6 inch (152.4 mm) strips from the middle. These strips were subjected to T-Peel tests (ASTM D-1876) on an Instron (TM) instrument with a crosshead speed of 10 inches (254 mm) per minute. The span used was 1 inch (25.4 mm). The recorded force was reported as pounds per inch (N/mm) T-Peel. The results are shown in the following table.

| Relative composition of base polymer material | | | T-Peel strength-pounds per inch (N/mm) | | | | | | |
| --- | --- | --- | --- | --- | --- | --- | --- | --- | --- |
| | | | Dwell time (sec) | | | | | | |
| PP | SP P-7E | SP P-25E | 5 | 10 | 20 | 40 | 60 | 120 | 180 |
| 100% | | 0 | 8 (1.4) | 10 (1.8) | 10 (1.8) | 14 (2.5) | 16 (2.8) | 15 (2.6) | 15 (2.6) |
| 75% | | 25% | 20 (3.5) | 30 (5.3) | 30 (5.3) | 40 (7.0) | 50 (8.8) | 50 (8.8) | 50 (8.8) |
| 50% | | 50% | 85 (14.9) | 105 (18.4) | 115 (20.1) | 105 (18.4) | 104 (18.2) | 108 (18.9) | 108 (18.9) |
| 25% | | 75% | 110 (19.3) | 110 (19.3) | 120 (21.0) | 105 (18.4) | 115 (20.1) | 100 (17.5) | 95 (16.6) |
| 0 | | 100% | 83 (14.5) | 86 (15.1) | 84 (14.7) | 84 (14.7) | 84 (14.7) | 60 (10.5) | 60 (10.5) |
| | 100% | 0 | 45 (7.9) | 66 (11.6) | 80 (14.0) | 80 (14.0) | 80 (14.0) | 70 (12.3) | 80 (14.0) |
| | 75% | 25% | 75 (13.1) | 90 (15.8) | 100 (17.5) | 101 (17.7) | 98 (17.2) | 94 (16.5) | 100 (17.5) |
| | 50% | 50% | 120 (21.0) | 115 (20.1) | 130 (22.8) | 140 (24.5) | 140 (24.5) | 130 (22.8) | 124 (21.7) |
| | 25% | 75% | 110 (19.3) | 95 (16.6) | 105 (18.4) | 110 (19.3) | 100 (17.5) | 90 (15.8) | 95 (16.6) |

From the above table it can be seen that when the base polymer material consists essentially of a blend of stereoregular polypropylene and essentially crystalline, sequentially polymerized propylene-ethylene product having a combined ethylene content of about 25% by weight at weight ratios of 25:75—75:25 (or 1:3—3:1), or a blend of essentially crystalline, sequentially polymerized propylene-ethylene product having a combined ethylene content of about 7% by weight, and an essentially crystalline, sequentially polymerized propylene-ethylene product with an ethylene content of 25% by weight at weight ratios of 25:75—75:25 (or 1:3—3:1), the bonding resin composition shows much better results than could have been predicted from a simple extrapolation between the values obtained for a base polymer material consisting of a single, pure component (ie 100% PP, 100% SP, P-25E or 100% SP P-7E). Indeed, the above table shows that such bonding resin compositions have the following three major advantages compared to those samples in which the base polymer material consists essentially of just the individual members of the foregoing combinations: (a) Faster bonding cycles—high bond strengths are achieved in a short dwell time (see values at 5 seconds); (b) Higher bond strengths than could have been predicted—at dwell times of 10 seconds or longer more than 100 pounds per inch (17.5 N/mm) T-Peel are achieved from a 50:50 combination compared to 10—80 pounds per inch (1.8—14.0 N/mm) obtained with the individual components of the base polymer; and (c) More stable bonds—the bond strengths are relatively insensitive to dwell time.

Hence, this invention provides an improved bonding resin composition, improved laminates, and an improved method for making laminates.

The expression "consisting essentially of" as used in this specification excludes any unrecited substance at a concentration sufficient to substantially adversely affect the essential properties and characteristics of the composition being defined, while permitting the presence of one or more unrecited substances at concentrations insufficient to substantially adversely affect said essential properties and characteristics.

**Claims**

1. A bonding resin composition composed of a blend consisting essentially of (a) maleic anhydride-modified, stereoregular polypropylene and (b) base polymer material comprising a polypropylene polymer characterised in that the combined maleic anhydride is 0.5—0.8% by weight of said modified polypropylene; and the base polymer material is present at a concentration of about 25 parts by weight per part by weight of said maleic anhydride-modified polypropylene, and is selected from the group consisting of (i) stereoregular polypropylene and essentially crystalline, sequentially polymerised propylene-ethylene product comprising a blend of propylene homopolymer, ethylene homopolymer and random copolymers of propylene and ethylene and having a combined ethylene content of 25% by weight, the weight ratio of said polypropylene to said product being about 1:3—3:1, and (ii) essentially crystalline sequentially polymerised propylene-ethylene product comprising a blend of propylene homopolymer, ethylene homopolymer and random copolymers of propylene and ethylene and having a combined ethylene content of 7% by weight, and essentially crystalline sequentially polymerised propylene-ethylene product having a combined ethylene content of 25% by weight, the weight ratio of these two products being about 1:3—3:1.

2. A bonding resin composition according to claim 1 in which, when the base polymer material is (i), the weight ratio of said polypropylene to said product is about 1:3.

3. A bonding resin composition according to claim 1 in which, when the base polymer material is (ii), the weight ratio of the two products is about 1:1.

4. A synthetic resin/metal laminate comprising a sheet of metal selected from the group consisting of steel and aluminum, and bonded directly to it a sheet of synthetic resin comprising a blend consisting essentially of (a) maleic anhydride-modified, stereoregular polypropylene and (b) base polymer material comprising a polypropylene polymer characterised in that the combined maleic anhydride is 0.5—0.8% by weight of said modified polypropylene; and the base polymer material is present at a concentration of about 25 parts by weight per part by weight of said maleic anhydride-modified polypropylene, and is selected from the group consisting of (i) stereoregular polypropylene and essentially crystalline, sequentially polymerised propylene-ethylene product comprising a blend of propylene homopolymer, ethylene homopolymer and random copolymers of propylene and ethylene and having a combined ethylene content of 25% by weight, the weight ratio of said polypropylene to said product being about 1:3—3:1, and (ii) essentially crystalline sequentially polymerised propylene-ethylene product comprising a blend of propylene homopolymer, ethylene homopolymer and random copolymers of propylene and ethylene and having a combined ethylene content of 7% by weight, and essentially crystalline sequentially polymerised propylene-ethylene product having a combined ethylene content of 25% by weight, the weight ratio of these two products being about 1:3—3:1.

5. A laminate according to claim 4 in which, when the base polymer material is (i), the weight ratio of said polypropylene to said product is about 1:3.

6. A laminate according to claim 4 in which, when the base polymer material is (ii), the weight ratio of the two products is about 1:1.

7. A laminate according to claim 4 which comprises a sheet of metal directly bonded to the other side of said sheet of synthetic resin.

8. A method of making a synthetic resin/metal laminate, which comprises bringing together under heat and pressure a sheet of metal selected from the group consisting of steel and aluminum, and a sheet of a synthetic resin comprising a blend consisting essentially of (a) maleic anhydride-modified, stereoregular polypropylene and (b) base polymer material comprising a polypropylene polymer characterised in that the combined maleic anhydride is 0.5—0.8% by weight of said modified polypropylene; and the base polymer material is present at a concentration of about 25 parts by weight per part by weight of said maleic anhydride-modified polypropylene, and is selected from the group consisting of (i) stereoregular polypropylene and essentially crystalline, sequentially polymerised propylene-ethylene product comprising a blend of propylene homopolymer, ethylene homopolymer and random copolymers of propylene and ethylene and having a combined ethylene content of 25% by weight, the weight ratio of said polypropylene to said product being about 1:3—3:1, and (ii) essentially crystalline sequentially polymerised propylene-ethylene product having a combined ethylene content of 7% by weight, and essentially crystalline sequentially polymerised propylene-ethylene product comprising a blend of propylene homopolymer, ethylene homopolymer and random copolymers of propylene and ethylene and having a combined ethylene content of 25% by weight, the weight ratio of these two products being about 1:3—3:1.

9. A method according to claim 8 in which, when the base polymer material is (i), the weight ratio of said polypropylene to said product is about 1:3.

10. A method according to claim 8 in which, when the base polymer material is (ii), the weight ratio of the two products is about 1:1.

**Patentansprüche**

1. Bindende Harzzusammensetzung, gebildet aus einer Mischung, die im wesentlichen aus (a) mit Maleinsäureanhydrid modifiziertem, stereoregulärem Polypropylen und (b) einem Basispolymermaterial, welches ein Polypropylen-Polymeres enthält, besteht, dadurch gekennzeichnet, daß das gesamte Maleinsäureanhydrid 0,5—0,8 Gew.-% des modifizierten Polypropylens beträgt und daß das Basispolymermaterial in einer Konzentration von etwa 25 Gewichtsteilen pro Gewichtsteil des mit Maleinsäureanhydrid modifizierten Polypropylens vorliegt und aus der Gruppe ausgewählt ist, welche aus (i) stereoregulärem Polypropylen und im wesentlichen kristallinem, sequentiell polymerisiertem Propylen-Ethylen-Produkt, das eine Mischung aus Propylen-Homopolymerem, Ethylen-Homopolymerem und Random-Copolymeren von Propylen und Ethylen umfaßt und einen Ethylengesamtgehalt von 25 Gew.-% besitzt, wobei das Gewichtsverhältnis des Polypropylens zum Produkt etwa 1:3—3:1 beträgt, und (ii) im wesentlichen kristallinem, sequentiell polymerisiertem Propylen-Ethylen-Produkt, das eine Mischung aus Propylen-Homopolymerem, Ethylen-Homopolymerem und Random-Copolymeren von Propylen und Ethylen umfaßt und einen Ethylengesamtgehalt von 25 Gew.-% besitzt, wobei das Gewichtsverhältnis des Polypropylens zum Produkt etwa 1:3—3:1 beträgt, und (ii) im wesentlichen kristallinem, sequentiell polymerisiertem Propylen-Ethylen-Produkt, das eine Mischung aus Propylen-Homopolymerem, Ethylen-Homopolymerem und Random-Copolymeren von Propylen und Ethylen unfaßt und einen Ethylengesamtgehalt von 7 Gew.-% besitzt, und im wesentlichen kristallinem, sequentiell polymerisiertem Propylen-Ethylen-Produkt mit einem Ethylengesamtgehalt von 25 Gew.-%, wobei das Gewichtsverhältnis dieser zwei Produkte etwa 1:3—3:1 beträgt, besteht.

2. Bindende Harzzusammensetzung nach Anspruch 1, worin, wenn das Basispolymermaterial (i) ist, das Gewichtsverhältnis des Polypropylens zum Produkt etwa 1:3 beträgt.

3. Bindende Harzzusammensetzung nach Anspruch 1, worin, wenn das Basispolymermaterial (ii) ist, das Gewichtsverhältnis der zwei Produkt etwa 1:1 beträgt.

4. Laminat aus synthetischem Harz und Metall, welches eine Folie aus Metall, das aus der aus Stahl und Aluminium bestehenden Gruppe ausgewählt ist, und direkt mit dieser verbunden eine Folie aus synthetischem Harz umfaßt, welches eine Mischung enthält, die im wesentlichen aus (a) mit Maleinsäureanhydrid modifiziertem, stereoregulärem Polypropylen und (b) einem Basispolymermaterial, welches ein Polypropylen-Polymeres enthält, besteht, dadurch gekennzeichnet, daß das gesamte Maleinsäureanhydrid 0,5—0,8 Gew.-% des modifizierten Polypropylens beträgt und daß das Basispolymermaterial in einer Konzentration von etwa 25 Gewichtsteilen pro Gewichtsteil des mit Maleinsäureanhydrid modifizierten Polypropylens vorliegt und aus der Gruppe ausgewählt ist, welche aus (i) stereoregulärem Polypropylen und im wesentlichen kristallinem, sequentiell polymerisiertem Propylen-Ethylen-Produkt, das eine Mischung aus Propylen-Homopolymerem, Ethylen-Homopolymerem und Random-Copolymeren von Propylen und Ethylen umfaßt und einen Ethylengesamtgehalt von 25 Gew.-% besitzt, wobei das Gewichtsverhältnis des Polypropylens zum Produkt etwa 1:3—3:1 beträgt, und (ii) im wesentlichen kristallinem, sequentiell polymerisiertem Propylen-Ethylen-Produkt, das eine Mischung aus Propylen-Homopolymerem, Ethylen-Homopolymerem und Random-Copolymeren von Propylen und Ethylen umfaßt und einen Ethylengesamtgehalt von 7 Gew.-% besitzt, und im wesentlichen kristallinem, sequentiell polymerisiertem Propylen-Ethylen-Produkt mit einem Ethylengesamtgehalt von 25 Gew.-%, wobei das Gewichtsverhältnis dieser zwei Produkte etwa 1:3—3:1 beträgt, besteht.

5. Laminat nach Anspruch 4, worin, wenn das Basispolymermaterial (i) ist, das Gewichtsverhältnis des Polypropylens zum Produkt etwa 1:3 beträgt.

6. Laminat nach Anspruch 4, worin, wenn das Basispolymermaterial (ii) ist, das Gewichtsverhältnis der zwei Produkte etwa 1:1 beträgt.

7. Laminat nach Anspruch 4, welches eine Metallfolie umfaßt, die direkt an die andere Seite der Folie aus synthetischem Harz gebunden ist.

8. Verfahren zum Herstellen eines Laminates aus synthetischem Harz und Metall, welches das Zusammenbringen einer Folie aus Metall, das aus der aus Stahl und Aluminium bestehenden Gruppe ausgewählt ist, und einer Folie aus einem synthetischen Harz unter Hitze und Druck umfaßt, wobei das Harz eine Mischung enthält, die im wesentlichen aus (a) mit Maleinsäureanhydrid modifiziertem, stereoregulärem Polypropylen und (b) einem Basispolymermaterial, welches ein Polypropylen-Polymeres enthält, besteht, dadurch gekennzeichnet, daß das gesamte Maleinsäureanhydrid 0,5—0,8 Gew.-% des modifizierten Polypropylens beträgt und daß das Basispolymermaterial in einer Konzentration von etwa 25 Gewichtsteilen pro Gewichtsteil des mit Maleinsäureanhydrid modifizierten Polypropylens vorliegt und aus der Gruppe ausgewählt ist, welche aus (i) stereoregulärem Polypropylen und im wesentlichen kristallinem, sequentiell polymerisiertem Propylen-Ethylen-Produkt, das eine Mischung aus Propylen-Homopolymerem, Ethylen-Homopolymerem und Random-Copolymeren von Propylen und Ethylen umfaßt und einen Ethylengesamtgehalt von 25 Gew.-% besitzt, wobei das Gewichtsverhältnis des Polypropylens zum Produkt etwa 1:3—3:1 beträgt, und (ii) im wesentlichen kristallinem, sequentiell polymerisiertem Propylen-Ethylen-Produkt mit einem Ethylengesamtgehalt von 7 Gew.% und im wesentlichen kristallinem, sequentiell polymerisiertem Propylen-Ethylen-Produkt, das eine Mischung aus Propylen-Homopolymerem, Ethylen-Homopolymerem und Random-Copolymerem von Propylen und Ethylen umfaßt und einen Ethylengesamtgehalt von 25 Gew.-% besitzt, wobei das Gewichtsverhältnis dieser zwei Produkte etwa 1:3—3:1 beträgt, besteht.

9. Verfahren nach Anspruch 8, worin, wenn das Basispolymermaterial (i) ist, das Gewichtsverhältnis des Polypropylens zum Produkt etwa 1:3 beträgt.

10. Verfahren nach Anspruch 8, worin, wenn das Basispolymermaterial (ii) ist, das Gewichtsverhältnis der zwei Produkte etwa 1:1 beträgt.

## 0 110 505

**Revendications**

1. Composition de résine adhésive, composée d'un mélange constitué essentiellement (a) d'un polypropylène stéréorégulier modifié par l'anhydride maléique et (b) d'une matière polymère de base comprenant un polymère de polypropylène, caractérisée en ce que l'anhydride maléique combiné constitue 0,5—0,8% en poids dudit polypropylène modifié et en ce que la matière polymère de base est présente dans une concentration d'environ 25 parties en poids par partie en poids du polypropylène modifié par l'anhydride maléique et est choisie dans le groupe constitué par: (i) un polypropylène stéréorégulier et un produit de propylène-éthylène polymérisé en séquences, essentiellement cristallin, comprenant un mélange d'homopolymère de propylène, d'homopolymère d'éthylène et de copolymères aléatoires de propylène et d'éthylène et ayant une teneur en éthylène combiné de 25% en poids, le rapport en poids dudit polypropylène audit produit étant d'environ 1:3—3,1, et (ii) un produit de propylène-éthylène polymérisé en séquences, essentiellement cristallin, comprenant un mélange d'homopolymère de propylène, d'homopolymère d'éthylène et de copolymères aléatoires de propylène et d'éthylène et ayant une teneur en éthylène combiné de 7% en poids, et un produit de propylène-éthylène polymérisé en séquences, essentiellement cristallin, ayant une teneur en éthylène combiné de 25% en poids, le rapport en poids de ces deux produits étant d'environ 1:3—3,1.

2. Composition de résine adhésive selon la revendication 1 dans laquelle, lorsque la matière polymère de base est (i), le rapport en poids dudit polypropylène audit produit est d'environ 1:3.

3. Composition de résine adhésive selon la revendication 1 dans laquelle, lorsque la matière polymère de base est (ii), le rapport en poids des deux produits est d'environ 1:1.

4. Stratifié de résine synthétique/métal comprenant une feuille de métal choisi dans le groupe constitué par l'acier et l'aluminium et, unie directement à celle-ci, une feuille de résine synthétique composée d'un mélange constitué essentiellement (a) d'un polypropylène stéréorégulier modifié par l'anhydride maléique et (b) d'une matière polymère de base comprenant un polymère de polypropylène, caractérisé en ce que l'anhydride maléique combiné constitue 0,5—0,8% en poids dudit polypropylène modifié et en ce que la matière polymère de base est présente dans une concentration d'environ 25 parties en poids par partie en poids du polypropylène modifié par l'anhydride maléique et est choisie dans le groupe constitué par: (i) un polypropylène stéréorégulier et un produit de propylène-éthylène polymérisé en séquences, essentiellement cristallin, comprenant un mélange d'homopolymère de propylène, d'homopolymère d'éthylène et de copolymères aléatoires de propylène et d'éthylène et ayant une teneur en éthylène combiné de 25% en poids, le rapport en poids dudit polypropylène audit produit étant d'environ 1:3—3,1, et (ii) un produit de propylène-éthylène polymérisé en séquences, essentiellement cristallin, comprenant un mélange d'homopolymère de propylène, d'homopolymère d'éthylène et de copolymères aléatoires de propylène et d'éthylène et ayant une teneur en éthylène combiné de 7% en poids, et un produit de propylène-éthylène polymérisé en séquences, essentiellement cristallin, ayant une teneur en éthylène combiné de 25% en poids, le rapport en poids de ces deux produits étant d'environ 1:3—3,1.

5. Stratifié selon la revendication 4 dans lequel, lorsque la matière polymère de base est (i), le rapport en poids dudit polypropylène audit produit est d'environ 1:3.

6. Stratifié selon la revendication 4 dans lequel, lorsque la matière polymère de base est (ii), le rapport en poids des deux produits est d'environ 1:1.

7. Stratifié selon la revendication 4 qui comprend une feuille de métal unie directement à l'autre face de ladite feuille de résine synthétique.

8. Procédé de fabrication d'un stratifié de résine synthétique/metal, consistant à réunir, avec application de chaleur et de pression, une feuille de métal choisi dans le groupe constitué par l'acier et l'aluminium et une feuille d'une résine synthétique composée d'un mélange constitué essentiellement (a) de polypropylène stéréorégulier modifié par l'anhydride maléique et (b) d'une matière polymère de base comprenant un polymère de polypropylène, caractérisé en ce que l'anhydride maléique combiné constitue 0,5—0,8% en poids dudit polypropylène modifié et en ce que la matière polymère de base est présente dans une concentration d'environ 25 parties en poids par partie en poids du polypropylène modifié par l'anhydride maléique et est choisie dans le groupe constitué par: (i) un polypropylène stéréorégulier et un produit de propylène-éthylène polymérisé en séquences, essentiellement cristallin, comprenant un mélange d'homopolymère de propylène, d'homopolymère d'éthylène et de copolymères aléatoires de propylène et d'éthylène et ayant une teneur en éthylène combiné de 25% en poids, le rapport en poids dudit polypropylène audit produit étant d'environ 1:3—3,1, et (ii) un produit de propylène-éthylène polymérisé en séquences, essentiellement cristallin, ayant une teneur en éthylène combiné de 7 % en poids, et un produit de propylène-éthylène polymérisé en séquences, essentiellement cristallin, comprenant un mélange d'homopolymère de propylène, d'homopolymère d'éthylène et de copolymères aléatoires de propylène et d'éthylène et ayant une teneur en éthylène combiné de 25% en poids, le rapport en poids de ces deux produits étant d'environ 1:3—3,1.

9. Procédé selon la revendication 8 dans lequel, lorsque la matière polymère de base est (i), le rapport en poids dudit polypropylène audit produit est d'environ 1:3.

10. Procédé selon la revendication 8 dans lequel, lorsque la matière polymère de base est (ii), le rapport en poids des deux produits est d'environ 1:1.

7